# EUROPEAN PATENT APPLICATION

(11) **EP 3 050 700 A1**
(43) Date of publication of application: **03.08.2016**
(21) Application number: 16152816.1
(22) Date of filing: 26.01.2016
(51) Int. Cl.: B32B 5/02, B32B 9/00, B32B 9/04, B32B 17/06, C08G 77/16, C08G 77/46

(54) **A METHOD FOR THE REINFORCEMENT OF NATURAL OR CONGLOMERATE STONE LIKE MATERIAL SLABS AND REINFORCED SLABS RESULTING**

(30) Priority: 27.01.2015 IT TV20150016
(71) Applicant: Toncelli, Luca, 36061 Bassano del Grappa (Vicenza) (IT)
(72) Inventor: Toncelli, Luca, 36061 Bassano del Grappa (Vicenza) (IT)
(74) Representative: Finetti, Claudia

(57) **Abstract**

In a procedure for reinforcing the non-visible surface of a slab made of natural or artificial stone material, wherein a mat/mesh of fibrous material is applied to the said surface, the said mat/mesh having been impregnated with a resin applied as a layer to the said surface, preferably prior to application of the mat/mesh, and then cured, the resin used is a silicone resin devoid of reactive monomers and/or solvents/diluents capable of emitting noxious gases/vapours.

In particular, a silicone resin which is a modified silica resin such as a hybrid copolymer of silicone and polypropylene glycol or a polyorganosiloxane-based silicone resin, which is cured by polycondensation promoted by natural humidity and/or forced convection and, optionally, by specific catalytic components for such resins, is used.

The invention also relates to the reinforced slabs thus obtained.

## Description

The present invention relates to a procedure for the reinforcement of slabs made of natural or artificial stone material.

The invention also relates to the reinforced slabs resulting from the procedure according to the invention.

There are known processes for reinforcing slabs made of natural stone materials, such as marble and granite, but also for artificial stone slabs, such as of agglomerated stone slabs (such as those obtained with the technology called Bretonstone), and for ceramic slabs (which are also known by the name Lapitech ) or glass slabs.

Usually, the procedure envisages the application, to the non-visible surface of the slab, of a reinforcing element, such as a mat, a mesh made of fibreglass, or another fibrous fabric. An organic resin layer, such as a polyester or epoxy resin, is distributed above and/or below the mat or mesh.

The reinforcing element with the resin is then subjected to mechanical action, normally consisting of a manual rolling, in order to evenly distribute the resin and ensure the perfect impregnation of the reinforcing element with the resin, in addition to the adhesion to the slab, and furthermore, the penetration of the resin into any cracks or cavities present in the slab. Finally the resin is cured at room temperature or with heat by means of treatment in a curing oven.

In the case of artificial stone material, the reinforcement primarily fulfils an anti-collapse function, therefore it is preferably applied to the non-visible side of the slabs, which can therefore undergo prior polishing on the visible side, since the latter is not cracked and could therefore withstand the stresses of the mechanical polishing procedure without any risk of breakage.

Instead and preferably, in the case of natural stone slabs, after application of the mat and of the resin layer, the slab is normally overturned for the application of a resin layer to the opposite surface too, so that the said layer penetrates into any cracks or cavities. After the resin curing phase, since the slab has gained sufficient mechanical strength, the slab is then finished normally by means of the customary polishing operation.

For the sake of reference to prior art documents relating to known procedures for the reinforcement of slabs made of natural or artificial stone material, Italian patents IT1291693 and IT1316526 are cited.

In this way, the desired result is obtained because the resulting slabs are adequately reinforced and able to resist significant mechanical stress.

However both the aforesaid industrial processes and the slabs resulting therefrom bring with them further technical problems for which adequate solutions have not yet been found.

A first type of problem stems from organic resins which have been and are still used in the known reinforcing processes.

First and foremost, the foresaid organic resins contain volatile components which are, by nature, noxious substances and, in some cases, toxic, which means they are hazardous for humans, and therefore the operative, who - during various operations such as the distribution of the resin after deposition of the mat/mesh and the roller pressing to evenly impregnate the mat/mesh with the resin - is constantly in contact with such substances.

Despite the use of personal protective equipment such as masks, the operative is therefore, inevitably, exposed to breathing in noxious substances.

Furthermore, during subsequent processing of the reinforced slab, a non-indifferent amount of machining sludge and production waste is produced containing organic components considered noxious, which may constitute a serious environmental problem if not disposed of appropriately.

The disposal of such sludge and waste involves labour- and cost-intensive procedures which impact negatively on the final cost of the slab.

Finally, given the content of organic components of the said slabs, it is necessary to envisage a similar disposal procedure therefor after the useful life thereof.

Another problem consists of the fact that the reinforcing layer thus obtained is rigid, in the same way as the material of which the slab is made, which means such layer does not perform an effective anti-collapse action and - in the event of breakage of the slab - the latter shatters and fragments into many pieces. For example in the case of slabs forming the cladding of large external walls, if the slab were to break as a result of the action of the wind or because accidentally hit by an object, or because of an earthquake, such events would obviously be a risk for people and things underneath.

A further problem is that of the poor fire resistance of the reinforced slabs due to the very use of polyester or epoxy resins. Indeed, a polyester resin or a conventional epoxy resin would lose certain characteristics thereof in temperatures above 150 °C and completely degrade at above 250 °C.

Finally, it is known that these organic resins have a limited resistance to atmospheric agents and to sunlight, which means they crumble over time and lose part of the mechanical characteristics thereof due to hydrolysis phenomena.

The main aim of the invention is to substantially overcome the aforesaid problems in an industrially and economically advantageous manner.

A further, more specific aim is to eliminate the risk of exposure, by the operatives involved in the production process, to substances, especially in the form of vapours of a noxious nature.

A still further specific aim, connected to the previous aim, is to radically reduce the formation of sludge and waste containing noxious substances which require long and costly procedures for the elimination thereof, facilitating - at the same time - the disposal of the reinforced slabs at the end of the useful life thereof.

A still further aim of the invention is to produce reinforced slabs with an anti-collapse function, i.e. which - in the event of accidental breakage - do not result in the formation of fragments and chips which are potentially hazardous for people and things.

Another object is to produce reinforced slabs which also feature high fire-resistance, even following exposure for prolonged periods.

A still further aim is to produce reinforced slabs which are not effected by hydrolysis phenomena or crumbling upon exposure to atmospheric agents.

Such aims are essentially achieved by a procedure as defined in Claim 1.

More specifically, the procedure according to the present invention is structured over the following phases:
1) Slab preparation phase
   (a) Washing of the surface of the slab to which the reinforcing element will be applied, preferably with a high-pressure water jet (a few dozen bars);
   (b) Drying of the slab, for example, by means of blowing hot air thereonto.
2) Phase in which the mat is applied to the non-visible surface of the slab and the slab is impregnated
   (a) uniform application to the surface of the slab to be coated, therefore to the non-visible surface, of a measured quantity of a (preferably deaerated) silicone resin which is sufficient to impregnate the mat/mesh and to dampen the surface of the slab to ensure excellent adhesion, the said resin being of the type devoid of reactive monomers and devoid of dilution solvent, and likewise, optionally, additivised with a polymerisation catalyst;
   (b) application of the mat/mesh to the surface of the slab;
   (c) uniform impregnation and distension of the mat/mesh over the surface of the slab, for example by means of a rolling action or other actions useful to such end;
   (d) curing of the resin by means of polycondensation at room temperature or, preferably, within a temperature-controlled and, if necessary, humidity-controlled chamber.

In the case of natural stone slabs, whose visible surface has not normally been finished yet, the following further phases are envisaged:
3) Pre-processing phase relating to the visible surface of the slab, comprising:
   (a) overturning of the slab so that the just "matted/meshed" surface is facing downwards and the visible surface is facing upwards;
   (b) optional calibration of the thickness of the visible surface of the slab;
   (c) honing of the visible surface;
   (d) washing of the visible surface of the slab, preferably with a high-pressure water jet (a few dozen bars), in order to clean the surface and any cracks or cavities;
   (e) drying off and drying out of the slab to remove all the water and humidity present.
4) Resin application phase relating to the visible surface of the slab, comprising:
   (a) application, to the visible surface of a slab, of resin, preferably of the silicone kind, in a sufficient quantity to fill any cracks and cavities present;
   (b) curing of the resin distributed over the surface at room temperature or within an oven;
   (c) cooling to room temperature.
5) Finishing phase relating to the visible surface of the slab, comprising:
   (a) removal of any residual surface layer of resin from the visible surface;
   (b) polishing of the visible surface.

As regards the curing temperature of the previous phase 2(d), when such temperature is higher than the room temperature, it is chosen according to the nature of the stone material forming the said slab to be reinforced.

More specifically, in the case of natural stone materials, such as marble or granite, such temperature must not exceed 50 °C in the case of marble or 80 °C in the case of granite. In the case of artificial stone material, such temperature limit may be higher, for example a maximum value of 120 °C in the case of the conglomerate known as Bretonstone and up to 150 °C in the case of the artificial stone material known as Lapitech. Such conditions and limitations are, however, well known to persons skilled in the art.

The description above highlights how the essential characteristic of the present invention lies in the use of a silicone resin, such resin being classifiable as a curing resin of the inorganic kind.

To put it briefly, silicone resin is understood as a compound with a three-dimensional crosslinked structure and high molecular weight.

As in quartz, such structure is constituted of silicon and oxygen, wherein however one oxygen atom is replaced by an organic group which is permanently linked to the polymer chain, which means the emission of organic vapours of a noxious or toxic nature is not possible.

The resin used in the invention process is a resin characterised in that such resin has repeating units represented by the following formulas: 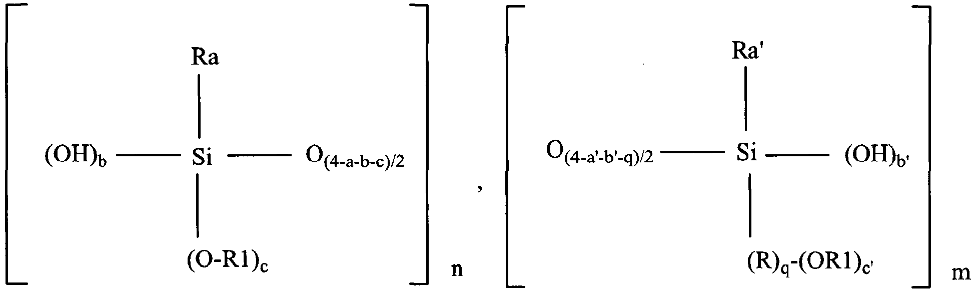 wherein:
a = 0, 1, 2, 3;
b = 0, 1, 2, 3;
c = 0, 1, 2, 3;
a + b + c < 3;
a' = 0, 1, 2, 3;
b' = 0, 1, 2, 3;
c' = 0, 1, 2, 3;
a' + b' + c'< 3;
n = 1-100;
m = 0-100;
q = 0-10;
and R, R1 represent alkyl groups.

When the oxygen atom subscript is 1, it stands for the central repetitive unit of the polymer resin, and when the subscript is ½, it stands for the terminal unit of the polymer resin. Particularly preferred resins for the procedure according to the present invention include silicone resins belonging to the classes of modified silica resins and polyorganosiloxane-based silicone resins.

The first are hybrid silicone and polypropylene glycol copolymers having the following structure: 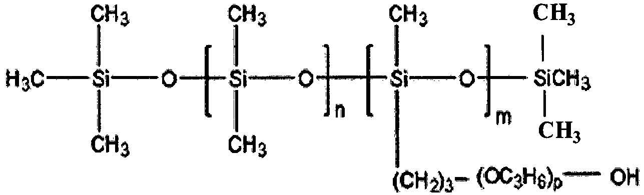 wherein
n = from 30 to 100
m = 1 - 12
p = 1 - 12

Since there are no reactive monomers or volatile solvents present, no volatile or gaseous emissions occur either during processing or during the curing reaction.

The latter is a polycondensation reaction brought about by the ambient humidity or by a forced humidity generated by increasing the ambient humidity within special curing chambers.

It is possible to speed up the reaction by adding a catalyst to the resin, such as a strong base such as an amine, or using aminosilanes or mixtures of organometallic divalent zinc-based compounds, and/or trivalent aluminium and/or diazo compounds.

These processes are well known per se, therefore no further information is necessary.

It is worthy of note that the aforesaid additives are also used in order to increase adhesion of the resin to the materials of a silica nature present in the stone substrate by exploiting the formation of Van der Waals bonds. Individual SiO- groups present in the resin also interact effectively due to the bonds formed with the silica groups present in any fibreglass which may be used.

Moving on, now, to the second type of silicone resin which is particularly advantageous for the present invention, namely polyorganosiloxane-based silicone resins, the repeating unit of the resin is represented by the following formula: 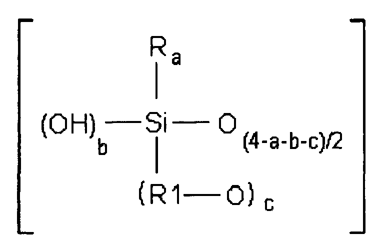 where:
a = 0, 1, 2, 3
b = 0, 1, 2, 3
c = 0, 1, 2, 3 , e
a + b + c < 3
and R, R1 represent alkyl groups, the choice of which may allow the obtaining of resins whose reciprocal difference lies solely in characteristics such as viscosity, reactivity, and suchlike.

Also in this case there are no reactive monomers and solvents or diluents present.

In particular, the presence of silicon-alkyl groups determines the formation of physical bonds with the stone structure when such contains silicon or compounds thereof.

Also in this case, the polymerisation reaction is a polycondensation and can be activated and/or accelerated by increasing the ambient temperature and/or by using organometallic compound-based catalysts comprising zinc and/or aluminium and/or diazo compounds in given concentrations.

Note that silicone resins adhere well to stones by binding chemically to the silicon atoms which are often present in stone materials and the aggregates constituting agglomerate slabs, such as Bretonstone, which typically contains quartz, or in ceramic slabs, above all with the possible addition of silanes as further adhesion promoters. For the reasons set out above, when carrying out the procedure according to the present invention no waste or rejects are generated which require special measures for the disposal thereof, which is a characteristic that also applies to the reinforced slabs when, at the end of the life cycle thereof, such slabs must be disposed of.

Silicone resins impart greater stability to the slabs treated in terms of increased resistance to atmospheric agents as well as to more aggressive conditions determined by temperature, humidity and thermal expansion.

Moreover, such resins determine an increase in the bending strength of over 20%.

A particularly advantageous feature of the silicone resins considered here is that since such resins do not have a defined flash point and do not burn with a visible and perceptible flame, they are, in practice, non-flammable, which - for the slabs treated according to the present invention - results in a high fire-resistance which lasts for a prolonged time.

Another particularly advantageous characteristic is that once cured, the silicone resin creates a structure, with the fibres of the mat/mesh, which is not rigid but rather elastic, presenting itself as an elastic/rubbery structure, which means that in the event of breakage of the slab, such slab does not shatter but, instead, remains whole. Therefore, in claddings for exterior walls, the reinforcing layer fulfils an anti-collapse function, preventing the free fragments detaching and subsequently falling.

To put it briefly, with the procedure according to the present invention, the following advantages are obtained:
(1) the silicone resins used for the impregnation are devoid of reactive monomers and solvents or diluents capable of emitting gases or vapours which are noxious for workers on the production line;
(2) the aforesaid resins also render the disposal of sludge and/or residues generated in the procedure non-hazardous and non-noxious and the same applies to the resulting slabs at the end of the useful life thereof;
(3) thanks to the use of the silicone resin stated above, the mat/mesh covering on the non-visible side of the slab being reinforced is not rigid, but has a certain elasticity/rubberiness, which means the reinforcing layer fulfils an anti-collapse action in the event of breakage of the reinforced slab;
(4) thanks to the use of silicone resins, articles can be obtained with high resistance to high temperatures (up to 600°C) and also with high resistance to crumbling and hydrolysis.

The invention also relates to reinforced slabs resulting from the procedure according to the invention, particularly when the resin used in the invention process is a resin characterised in that such resin has repeating units represented by the following formulas: 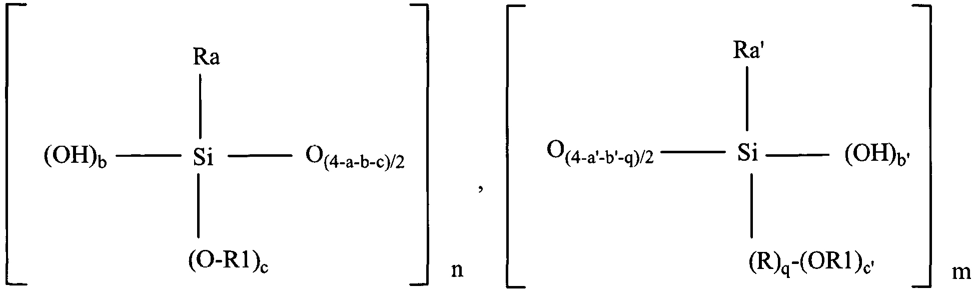 wherein:
a = 0, 1, 2, 3;
b = 0, 1, 2, 3;
c = 0, 1, 2, 3;
a + b + c < 3;
a'= 0, 1, 2, 3;
b'= 0, 1, 2, 3;
c' = 0, 1, 2, 3;
a' + b' + c' < 3;
n = 1-100;
m = 0-100;
q = 0-10;
and R, R1 represent alkyl groups.

When the oxygen atom subscript is 1, it stands for the central repetitive unit of the polymer resin, and when the subscript is 1/2, it stands for the terminal unit of the polymer resin. Particularly preferred slabs are the reinforced slabs obtained with the procedure according to the invention, wherein the resin is a hybrid silicone and polypropylene glycol copolymer having the following structure: 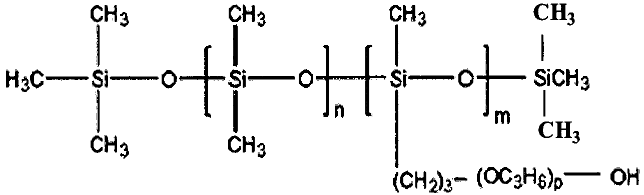 wherein:
n = from 30 to 100
m = 1-12
p = 1-12.

Particularly preferred slabs are also the reinforced slabs obtained with the procedure according to the invention, wherein the resin is a polyorganosiloxane-based silicone resin, wherein the repeating unit of the resin is represented by the following formula: 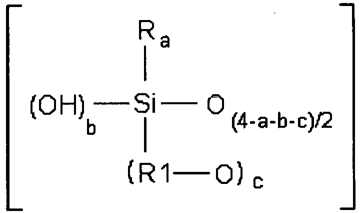 where:
a = 0, 1, 2, 3
b = 0, 1, 2, 3
c = 0, 1, 2, 3, e
a + b + c < 3
and R, R1 represent alkyl groups, the choice of which may allow the obtaining of resins whose reciprocal difference lies solely in characteristics such as viscosity, reactivity, and suchlike.

The invention has been described with reference to preferred embodiments as regards both the silicone resin types and the method for making the slabs of stone material, but it is understood that conceptually equivalent modifications and variants are possible and may be envisaged by persons skilled in the art, also with regards to the method for the impregnation of the slab and/or mat/mesh with the silicone resin.

## Claims

1. A procedure for the production of a reinforcing layer on the surface of an article in the form of a slab made of natural or artificial stone material, wherein
(a) a layer of a resin is applied to the said surface, which has, optionally, been previously cleaned and dried;
(b) a mat or mesh made of fibrous material is applied on top of the resin, arranged to cover the entire surface to be reinforced;
(c) pressure is applied, which is distributed over the said mat/mesh in so that the said mat/mesh is impregnated with the said resin and adheres to the said surface and
(d) the procedures continues by curing the resin at a temperature between the ambient temperature and a controlled higher temperature which depends on the kind of the said stone material,
**characterised in that** the resin used is a silicone resin devoid of reactive monomers and solvents/diluents capable of emitting gases or vapours which are noxious,
and **characterised in that** the repeating units of the said silicone resin are represented by the following formulas: 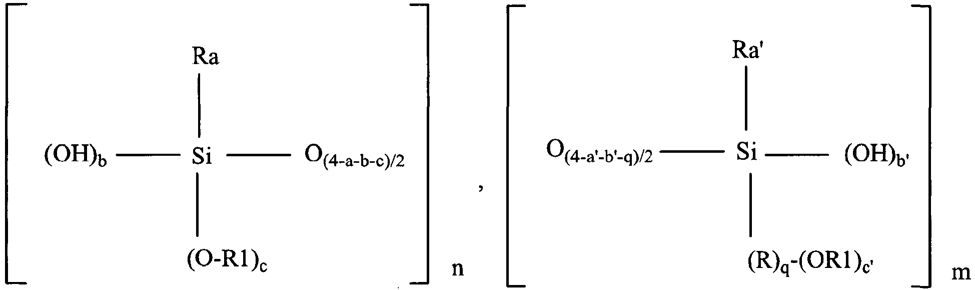 wherein:
a = 0, 1, 2, 3;
b = 0, 1, 2, 3;
c = 0, 1, 2, 3;
a + b + c < 3;
a' = 0, 1, 2, 3;
b' = 0, 1, 2, 3;
c' = 0, 1, 2, 3;
a' + b' + c' < 3;
n = 1-100;
m = 0-100;
q = 0-10;
and R, R1 represent alkyl groups.

2. A procedure according to Claim 1, **characterised in that** the said surface which is reinforced is the non-visible surface of the said slab article.

3. A procedure according to Claim 1, **characterised in that** the said silicone resin is a hybrid silicone and polypropylene glycol copolymer having the following structure: 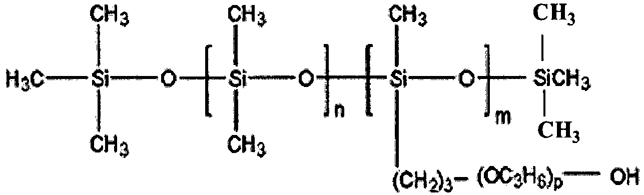 wherein
n = from 30 to 100
m = 1 - 12
p = 1 - 12
and the curing reaction is a polycondensation reaction catalysed by the ambient humidity or by a forced humidity generated by increasing the ambient humidity within special curing chambers.

4. A procedure according to Claim 3 **characterised in that** the said silicon resin is additivised with a catalyst, such as a strong base such as an amine, or using aminosilanes or mixtures of organometallic divalent zinc-based compounds, and/or trivalent aluminium and/or diazo compounds.

5. A procedure according to Claim 1, **characterised in that** the said silicone resin is a polyorganosiloxane-based silicone resin, in which the repeating unit of the resin is represented by the following formula: 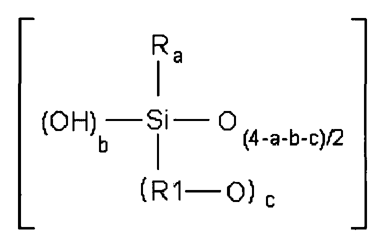 wherein:
a = 0, 1, 2, 3
b = 0, 1, 2, 3
c = 0, 1, 2, 3, e
a + b + c < 3
and R, R1 represent alkyl groups.

6. A procedure according to Claim 5, **characterised in that** the curing reaction takes the form of polycondensation and is activated and/or accelerated by increasing the ambient temperature and/or by using organometallic compound-based catalysts comprising zinc and/or aluminium and/or diazo compounds in given concentrations.

7. A procedure according to anyone of the previous claims, **characterised in that** the surface of the slab to be reinforced has previously undergone washing with a pressurised water jet and drying with hot air.

8. A procedure according to anyone of the preceding claims, **characterised in that**, in the case of natural stone slabs, a resin is applied to the as yet unfinished visible surface, after optional calibration and sanding and after washing and drying, the said resin being applied in a sufficient amount to fill any cracks and cavities in the surface and then such procedure continues with the curing of the resin under appropriate conditions therefor.

9. A procedure according to Claim 8, **characterised in that** the said resin is a silicone resin.

10. A procedure according to Claim 9, **characterised in that** the said resin is the same resin as used to reinforce the non-visible surface.

11. A reinforced slab made of a natural or artificial stone material, wherein the reinforcement is applied to the non-visible surface and consists of a mat layer/mesh of fibrous material impregnated with a cured resin, **characterised in that** the said resin is a silicone resin devoid of reactive monomers and solvents/diluents capable of emitting noxious vapours and/or gases, and is a silicone resin as defined in Claim 1.

12. A reinforced slab according to Claim 11, **characterised in that** the said resin is a silicone resin as defined in Claims 3 and/or 5.
